**Europäisches Patentamt**

**European Patent Office**

**Office européen des brevets**

(19)

(11) Veröffentlichungsnummer: **0 050 676**
**B2**

(12) **NEUE EUROPÄISCHE PATENTSCHRIFT**

(45) Veröffentlichungstag der neuen Patentschrift:
02.08.89

(51) Int. Cl.⁴: **H 02 M 3/337**

(21) Anmeldenummer: **80106526.9**

(22) Anmeldetag: **24.10.80**

(54) **Verfahren und Vorrichtung zur Aufrechterhaltung der Eingangssymmetrie eines Gegentakt-Wandlers bei grossen Änderungen der Eingangsspannung.**

(43) Veröffentlichungstag der Anmeldung:
**05.05.82 Patentblatt 82/18**

(45) Bekanntmachung des Hinweises auf die Patenterteilung:
**12.02.86 Patentblatt 86/7**

(45) Bekanntmachung des Hinweises auf die Entscheidung über den Einspruch:
**02.08.89 Patentblatt 89/31**

(84) Benannte Vertragsstaaten:
**AT BE CH FR GB IT LI LU NL SE**

(56) Entgegenhaltungen:
**DE-A-2 050 368**
**DE-A-2 111 222**
**DE-B-2 659 636**
**FR-A-2 276 733**
**FR-A-2 372 544**
**GB-A-1 594 400**
**US-A-3 657 631**
**US-A-3 737 756**
**US-A-3 859 583**
**US-A-3 870 943**
**US-A-4 150 424**

(73) Patentinhaber: **Kalfhaus, Reinhard, Mainring 10, D-6451 Mainhausen 1 (DE)**

(72) Erfinder: **Kalfhaus, Reinhard, Mainring 10, D-6451 Mainhausen 1 (DE)**

(74) Vertreter: **Strasse, Joachim, Dipl.- Ing., Strasse und Stoffregen European Patent Attorneys Zweibrückenstrasse 17, D-8000 München 2 (DE)**

EP 0 050 676 B2

## Beschreibung

Die Erfindung bezieht sich auf ein Verfahren und eine Vorrichtung zur Aufrechterhaltung der Eingangssymmetrie eines Gegentaktwandlers bei großen Schwankungen der Eingangsspannung sowie der Ausgangslast, gemäß Oberbegriff des Anspruches 1 und eine Anordnung zur Durchführung des Verfahrens.

Ein Verfahren und eine Vorrichtung der vorstehend beschriebenen Gattung sind bereits bekannt (U-A-3 657 631). Die bekannte Vorrichtung enthält einen ersten Regelkreis für die Aufrechterhaltung der Ausgangsspannung auf einem gewünschten Wert und einen zweiten Regelkreis für die Einstellung gleich langer stromführender Periodendauern bei den Transistoren.

Bestandteil des ersten Regelkreises ist ein Pulsbreitenmodulator, dessen Ausgangsimpulse im Sinne einer Aufrechterhaltung der Ausgangsspannung verlängert oder verkürzt werden. Der zweite Regelkreis enthält zwei Meßeinrichtungen für die Erzeugung von Signalen, die den stromführenden Perioden proportional sind, und zwei Spitzenwertgleichrichter, die an die Meßeinrichtungen angeschlossen sind. Die Ausgänge der Spitzenwertgleichrichter sind je mit einem Eingang eines Differenzverstärkers verbunden, der zwei Ausgänge hat, zwischen denen eine der Differenz der Eingangsspannungen entsprechende Ausgangsspannung ansteht. Die Differenzspannung am Ausgang des Differenzverstärkers beaufschlage Steuereingänge eines astabilen Multivibrators. Der astabile Multivibrator erzeugt eine Folge von Rechteckimpulsen mit gleichbleibender Frequenz. Das Verhältnis Impulsdauer zu Impulspause der Rechteckimpulse wird in Abhängigkeit von der Ausgangsspannung des Differenzverstärkers geändert. Die Rechteckimpulse des astabilen Multivibrators bestimmen den Beginn der Impulse des Impulsbreitenmodulators. Zwei zueinander antivalente Ausgangssignale des astabilen Multivibrators sorgen dafür, daß in Abhängigkeit von der Größe der Differenzspannung die stromführenden Perioden der beiden Transistoren im Sinne einer Verminderung der Differenzspannung gegeneinander verschoben werden. Die beiden Regelkreise für die Aufrechterhaltung der Ausgangsspannung und für die Einstellung gleich langer stromführender Perioden der Transistoren sind bei der bekannten Vorrichtung miteinander gekoppelt.

Aus der FR-A-2 372 544 ist ferner ein Gegentaktwandler bekannt, dessen Ausgangsspannung geregelt wird und der eine stromausgleichende Schaltung enthält. Ein Bestandteil des Gegentaktwandlers ist ein Transformator, dessen, Primärseite mittels zweier Transistoren abwechselnd an eine Gleichspannungsquelle angelegt wird. Eine Steuerschaltung erzeugt Impulse für die Transistoren, die abwechselnd in den leitenden Zustand versetzt werden. In Reihe mit den Emitter-Kollektor-Strecken der Transistoren sind Strommeßeinrichtungen angeordnet, die an je eine Abtast- und Speicherschaltung angeschlossen sind. Der Ausgang jeder Abtast- und Halteschaltung ist an einen Eingang eines Komparators gelegt, dessen zweiter Eingang mit der Strommeßeinrichtung verbunden ist, die dem jeweils anderen Transistor zugeordnet ist. Während einer stromführenden Periode des einen Transistors wird in der an die entsprechende Meßeinrichtung angeschlossenen Abtast- und Speicherschaltung der Maximalwert des Stroms gespeichert. Gleichzeitig wird vom Komparator der während der vorausgehenden stromführende Periode des anderen Transistors gespeichert Wert mit dem vorliegenden Stromwert verglichen. Wenn beide Stromwerte übereinstimmen, schaltet der Komparator den Transistor ab. Die Einschaltung der Transistoren wird von Schwellenwertschaltern gesteuert, deren Eingänge mit einem Dreieckspannungsgenerator verbunden sind. Die mit dem ersten Transistor verbundene Schwellenwertschaltung liefert ein Ausgangssignal, wenn das Dreiecksignal den Schwellenwert überschreitet. Die an den zweiten Transistor angeschlossene Schwellenwertschaltung gibt eine Ausgangsspannung dann ab, wenn das Dreiecksignal den eingestellten Schwellenwert unterschreitet. Die Grenze zwischen beiden Schwellenwerten wird in Abhängigkeit von der Regelabweichung des Ausgangssignals verändert.

Bekannt ist auch eine Schaltungsanordnung mit einem Gegentaktwandler, der einen Transformator mit zwei gleichen Primärwicklungen oder eine mit einer Mittelanzapfung versehene Primärwicklung sowie mindestens eine Sekundärwicklung enthält, deren Ausgangsgröße zur Bildung des Istwerts der Regelgröße herangezogen wird. Die Regelabweichung beaufschlagt bei dieser bekannten Anordnung ein Stellglied für das Ein- und Ausschalten der Transistoren, von denen jeder in Reihe mit einer Primärwicklung oder Primärwicklungshälfte angeordnet ist. Mit den Stromkreisen, in denen die Primärwicklungen oder Primärwicklungshälften und die Transistoren angeordnet sind, sind jeweils Stromwandler mit Bürden verbunden, denen Speicher nachgeschaltet sind, deren Ausgangssignale zur Erzeugung gleicher Primärströme weiterverarbeitet werden (DE-B1-2 659 636). Bei der bekannten Schaltungsanordnung sind den Stromwandlern über Gleichrichter als Speicher Kondensatoren nachgeschaltet, die durch Parallelwiderstände entladen werden, so daß keine den Stromamplituden in den stromführenden Periodendauern genau entsprechenden Meßwerte miteinander verglichen werden. Mit den Kondensatoren und den Stromwandlern sind Komparatoren verbunden, mit denen der während einer stromführenden Periode über einen Transistor fließende Strom ständig mit dem in einem Speicher enthaltenen Wert verglichen wird. Sobald ein dem Strom in der stromführenden Periode proportionaler Meßwert gleich dem gespeicherten Wert ist, wird der Transistor nichtleitend gesteuert.

Schließlich ist ein Gegentaktwandler bekannt, der einen Impulsbreitenmodulator enthält, durch den zwei Transistoren angesteuert werden, die in Reihe mit jeweils eine Hälfte einer eine Mittelanzapfung enthaltenden Primärwicklung eines Transformators angeordnet sind. In Reihe mit den Transistoren sind jeweils Stromüberwachungsanordnungen geschaltet, die mit einem Sägezahngenerator verbunden sind. Wenn der Kollektorstrom des einen Transistors während der stromführenden Periode größer als der Kollektorstrom des anderen Transistors in der vorausgegangenen stromführenden Periode ist, wird die Steigung der Sägezahnspannung erhöht, wodurch der Stromfluß früher beendet wird. Der Soll- und der Istwert der Ausgangsspannung des Gegentaktwandlers sind je an einen Eingang eines Komparators gelegt, dessen Ausgang mit dem einen Eingang eines weiteren Komparators verbunden ist, dessen anderer Eingang von der Sägezahnspannung beaufschlagt ist. Vom Ausgangssignal des weiteren Komparators wird jeweils das Ende der pulsbreitenmodulierten Ansteuersignale der Transistoren im Sinne einer Symmetrierung der Ströme der beiden Transistoren beeinflußt. Der Beginn der Ansteuersignale wird von einem Taktgenerator bestimmt (US-A-4 150 425).

Der Erfindung liegt die Aufgabe zugrunde, eine Verfahren der eingangs beschriebenen Gattung derart weiterzuentwickeln, daß auch bei großen Schwankungen der Eingangsspannung und der Ausgangslast unsymmetrische Gleichströme auf der Primärseite vermieden werden.

Die Aufgabe wird erfindungsgemäß dadurch gelöst, daß die Strom-amplituden oder die Spannungszeitflächen der in jeder stromführenden Periode an den Transistoren anstehenden Ström bzw. Spannungen gemessen werden und daß nach Beendigung der Feststellung der Spannungszeitfläche oder Stromamplitude in einer stromführenden Periode des ersten Transistors die Differenz unter Verwendung der Spannungszeitfläche oder Stromamplitude der unmittelbar vorausgegangenen stromführenden Periode des zweiten Transistors gebildet wird und der Regelabweichung, bis eine weitere Differenz bei der Messung der nächstfolgenden Amplitude oder Spannungszeitfläche vorgebbar ist, zur Beeinflussung der Dauer der stromführenden Periode des ersten Transistors in dem Sinne aufgeschaltet wird, daß die Periode verlängert wird, wenn sie Spannungszeitfläche oder Stromamplitude am zweiten Transistor diejenige des ersten Transistors übersteigt um im umgekehrten Fall verkürzt wird.

Mit diesem Verfahren ist es möglich, bei Änderungen der Eingangsspannung im Verhältnis von mehr als eins zu fünf noch eine genaue Regelung des Ausgangsstroms beziehungsweise der Ausgangsspannung zu erhalten. Trotzdem wird die Entstehung unsymmetrischer Ströme in den Transistoren vermieden. Das vorstehend erläuterte Verfahren erlaubt daher die Verwendung von Gegentaktwandlern bei Regelung des Ausgangsstroms oder der Ausgangsspannung und die Ausnutzung der Vorteile der Gegentaktwandler.

Ein weitere Lösung des erfindungsgemäßen Verfahrens besteht darin, daß enstatt einer zwei Differenzen erzeugt werden, die aus den in benachbarten stromführenden Perioden der Transistoren festgestellten Spannungszeitflächen oder Stromamplituden durch die jeweilige Vertauschung von Minuend und Subtrahend abgeleitet werden, daß als Störgröße jeweils diejenige Differenz, deren in der gerade ablaufenden Periode festgestellt Spannungszeitfläche oder Stromamplitude den Subtrahend bildet, der Regelabweichung so lange aufgeschaltet wird, bis eine weitere Differenz bei der Messung der nächstfolgeden Amplitude oder Spannungszeitfläche verfügbar ist. Durch die nahezu gleichbleibende Regelkonstante werden von Lastschwankungen hervorgerufene Abweichungen der Regelgröße vom Sollwert in kurzer Zeite wieder beseitigt. Dieser Vorteil wird durch die taktweise Anpassung des aus der Unsymmetrie der beiden Primärstromkreise abgeleiteten Signals erhalten. Insbesondere werden dadurch die Vorteile erzielt, daß zur Regelung und Erkennung eine halbe Periode ausreicht; die Erkennung von Fehlern erfolgt nach der Ansteuerphase der 3 Transistoren.

Bei einer Anordnung mit einem Gegentaktwandler, der einen Transformator mit zwei gleichen Primärwicklungen oder eine mit einer Mittelanzapfung versehene Primärwicklung sowie zwei Sekundärwicklungen enthält, von denen eine zur Abgabe des Istwerts der Regelgröße bestimmt ist, der nach der Subtraktion des Sollwerts einen Pulsbreitenmodulator beaufschlagt, durch den in zwei um 180° phasenverschoben Perioden zwei Transistoren ein- und ausgeschaltet werden, von denen jeder in Reihe mit einer Primärwicklung oder Primärwicklungshälfte angeordnet ist, wobei mit den die Primärwicklungen oder Primärwicklungshälften und die Transistoren enthaltenden Stromkreisen nebst Bürden verbunden sind, deren Ausgangssignale zur Bildung von Differenzwerten benutzt werden, besteht zur Durchführung des erfindungsgemäßen Verfahrens darin, daß als Meßwertgeber wahlweise Spannungszeitflächenmeßeinrichtungen vorgesehen sind, daß den Meßeinrichtungen Speicher nachgeschaltet sind, die jeweils zu Beginn eines Ansteuersignals für die Transistoren auf Null zurückstellbar sind, daß die Speicher mit Eingängen einer Subtraktionsschaltung verbunden sind, die zwei Differenzen erzeugt, bei denen jeweils Minuend und Subtrahend vertauscht sind, daß die beiden Differenzen verschiedenen Speichern zuführbar sind, die abwechselnd durch die Ansteuersignale auf Null zurückstellbar sind, und daß die Speicher an Eingänge eines Verstärkers angeschlossen sind, dem ein Summierglied für die Störgrößenaufschaltung mit der Regelabweichung nachgeschaltet ist, wobei das Summierglied einen Impulsbreitenmodulator speist, der zwei, mit je einem der Transistoren verbundene Ausgänge aufweist.

Es genügt bei dieser Anordnung der Einsatz einer einfach aufgebauten Schaltung, um die einwandfreie Arbeitsweise des Gegentaktwandlers im Falle großer Eingangsspannungsschwankungen und Lastschwankungen zu erzielen.

Bei einer weiteren bevorzugten Ausführungsform ist vorgesehen, daß zu den Speichern Schalter parallel gelegt sind, die von Ausgangssignalen monostabiler Kippstufen einschaltbar sind, die jeweils von einer Anstiegsflanke des Ansteuersignals für die Ansteuerung der Transistoren anstoßbar sind.

Ein Ausführungsbeispiel der Erfindung wird im folgenden anhand eines in einer Zeichnung dargestellten Ausführungsbeispiels näher erläutert, aus dem sich weitere Merkmale sowie Vorteile ergeben.

Es zeigen:

Fig. 1 eine Schaltungsanordnung zur Aufrechterhaltung einer genauen Regelung der Ausgangsspannung beziehungsweise des Ausgangsstroms eines Gegentakwandlers bei großen Schwankungen der Eingangsspannung und Ausgangslast in einem Blockschaltbild,

Fig. 2 ein Diagramm des zeitlichen Verlaufs von Spannungen an verschiedenen Stellen der Anordnung gemäß Fig. 1.

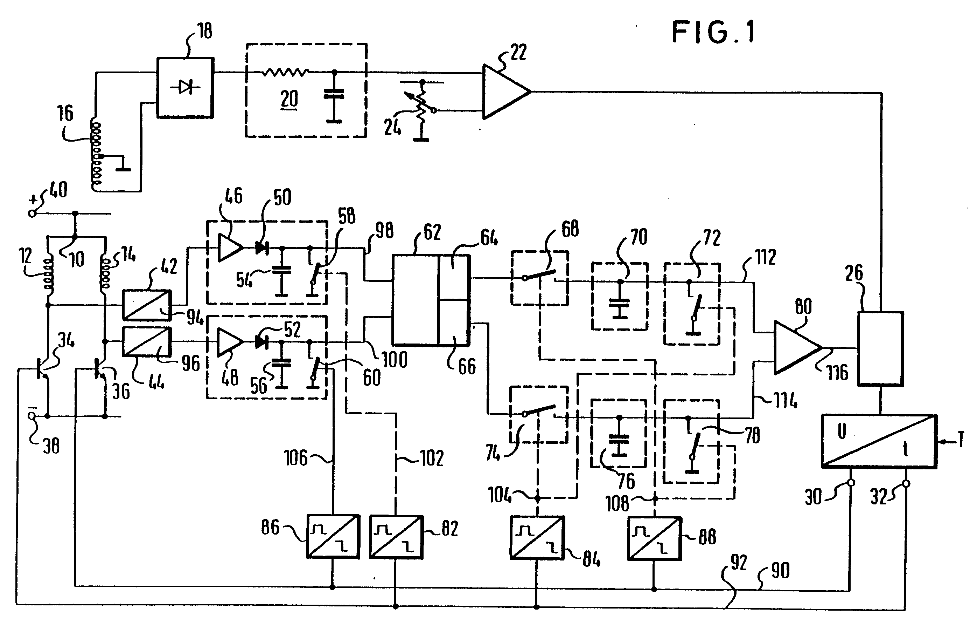

Der in Fig. 1 dargestellt Gegentakt-Spannungswandler enthält einen Transformator mit zwei über eine Mittelanzapfung 10 miteinander verbundenen Primärwicklungshälften 12, 14 und mit einer Sekundärwicklung 16, die eine an Massepotential gelegte, nicht näher bezeichnete Mittelanzapfung aufweist. Die Enden der Sekundärwicklung 16 sind an einen Doppelweggleichrichter 18 angeschlossen, dem ein Filter zur Bildung einer geglätteten Ausgangsspannung 20 nachgeschaltet ist, das aus einem Kondensator und einer Induktivität besteht, die nicht näher bezeichnet sind. An den Ausgang des Filters 20 können nicht dargestellt Stromverbraucher angeschlossen sein.

Der Ausgang des Filters 20, das die vom Gleichrichter 18 abgegebene pulsierende Gleichspannung glättet, ist weiterhin mit einem Eingang einer Subtraktionsschaltung 22 verbunden, die zugleich als Verstärker arbeitet. Der zweite Eingange der Subtraktionsschaltung 22, bei der es sich um einen Differenzverstärker handeln kann, ist an eine einstellbare Gleichspannungsquelle 24 angeschlossen. Die Ausgangsspannung des Filters 20 stellt den Istwert der Regelgröße dar, während die von der Gleichspannungsquelle 24, zum Beispiel einem Potentiometer, abgegriffene Spannung den Sollwert bildet. Die Subtraktionsschaltung 22 erzeugt aus dem Sollwert und dem Istwert die Regelabweichung, die einem Eingang einer Summierschaltung 26 zugeführt wird.

An den Ausgang der Summierschaltung 26 ist ein Impulsbreitenmodulator 28 angeschlossen, der zwei Ausgänge 30 und 32 hat. An den Ausgängen 30 und 32 stehen zwei in ihrer Periode um 180° gegeneinander phasenverschobene impulsbreitenmodulierte Signale zur Verfügung, die jeweils an die Basen von Transistoren 36 und 34 gelegt sind. Der Transistor 34 ist mit der Primärwicklungshälfte 12 des Transformators in Reihe geschaltet. Ebenso ist der Transistor 36 in Reihe mit der Primärwicklungshälfte 14 angeordnet. Die Emitter der Transistoren 34, 36 sind gemeinsam an den negativen Pol 38 einer Gleichspannungsquelle gelegt, deren positiver Pol 40 die Anzapfung 10 speist.

An die Verbundungsstelle zwischen der Primärwicklungshälfte 12 und dem Kollektor des Transistors 34 beziehungsweise zwischen der Primärwicklungshälfte 14 und dem Kollektor des Transistors 36 kann je eine Anordnung zur Messung des Zeitintegrals der anstehenden Spannung während einer Periode des impulsbreitenmodulierten Signals angeschlossen sein (42, 46, 50, 54, 44, 48, 52, 56). An Stelle einer solchen Spannungszeitflächenmeßanordnung können auch Stromwandler für die über die jeweiligen Transistoren 34, 36 fließenden Ströme verwendet werden. Bei der in Fig. 1 gezeigten Schaltungsanordnung sind schematisch dargestellte Stromwandler 42, 44 in die Primärstromkreise des Transformators eingeführt. Die nicht näher dargestellten Primärwicklungen der Stromwandler liegen zum Beispiel in Reihe mit den Primärwicklungshälften 12 und 14. Den nicht dargestellten Sekundärwicklungen der Stromwandler 42, 44 sind Bürden parallel geschaltet, an denen Spannungen abgegriffen werden, die den über die Transistoren 34, 36 fließenden Strömen proportional sind.

Die Bürden sind jeweils über einen Verstärker 46 beziehungsweise 48 und einen Gleichrichter 50 beziehungsweise 52 an einen Analogspeicher 54 beziehungsweise 56 angeschlossen. Im Ausführungsbeispiel bildet die Kombination von Verstärker 46 beziehungsweise 48, Diode 50, 52 und Speicher 54, 56 bildet einen Spitzenwertspeicher des Zeitintegrals der anstehenden Spannung. Bei den Analogspeichern 54, 56 kann es sich um Kondensatoren handeln, deren zweite Anschlüsse an Massepotential gelegt sind. Parallel zu den Analogspeichern 54, 56 sind jeweils Schalter 58, 60 angeordnet, die Schalttransistoren sein können.

Die Analogspeicher 54, 56 sind mit je einen Eingang einer Subtraktionsschaltung 62 verbunden, die zwei Differenzsignale erzeugt. Das erste Differenzsignal, das an einem Ausgangsteil 64 verfügbar ist, ist aus dem Speicherwert des Analogspeichers 54 als Minuenden und dem Wert des Analogspeichers 56 als Subtrahenden gebildet. Beim zweiten, an einem Ausgangssignal 66 anstehenden Differenzsignal verhält es sich umgekehrt, das heißt Minuend ist der Inhalt des Analogspeichers 56, während der Inhalt des Analogspeichers 54 als Subtrahend verwendet ist. Mit dem Ausgangsteil 64 ist ein Schalter 68 verbunden, an den ein weiterer Analogspeicher 70 angeschlossen ist. Parallel zum Analogspeicher 70 ist wiederum ein Schalter 72 gelegt.

Das Ausgangsteil 66 speist einen Stromkreis, der gleiche Elemente enthält wie der dem Ausgangsteil 64 nachgeschaltete Stromkreis. Dem Ausgangssignal 64 ist ein Schalter 74 nachgeordnet, an den sich ein Analogspeicher 76 anschließt, zu dem ein Schalter 78 parallel angeordnet ist.

Die Schalter 68, 72, 74 und 78 können Schalttransistoren sein. Bei den Analogspeichern 70 und 76 kann es sich um Kondensatoren handeln.

Die Analogspeicher 70, 76 speisen je einen Eingang eines Verstärkers 80, dessen Ausgang an den zweiten Eingang der Summierschaltung 26 angeschlossen ist. Mit dem Ausgang 32 des Impulsbreitenmodulators 28 sind zwei monostabile Kippstufen 82 und 84 verbunden. Die Kippstufe 82 wird durch den Beginn der vorzugsweise ansteigenden Flanke des am Ausgang 32 erzeugten impulsbreitenmodulierten Signals angeregt. Im Gegensatz dazu wird die Kippstufe 84 durch die Beendigung der dann abfallenden Flanke des impulsbreitenmodulierten gleichen Signals angestoßen. Der Ausgang 30 speist ebenfalls zwei monostabile Kippstufen 86 und 88. Während die Kippstufe 86 von der ansteigenden Flanke des am Ausgang 30 auftretenden impulsbreitenmodulierten Signals angestoßen wird, bringt die abfallende Flanke dieses Signals die Kippstufe 88 zum Ansprechen.

Der Schalter 58 wird vom Ausgangssignal der Kippstufe 82 gesteuert. Beim Auftreten des von der Kippstufe erzeugten kurzzeitigen Ausgangssignals wird der Schalter 58 geschlossen. Die Dauer des Signals ist so bemessen, daß der Analogspeicher 54 entladen wird. Das kurzzeitige Ausgangssignal der Kippstufe 84 schließt die Schalter 72 und 74. Die Dauer des Ausgangssignals der Kippstufe 84 ist an die Entladezeit beziehungsweise Aufladezeit für die Analogspeicher 70 beziehungsweise 76 angepaßt. Das Ausgangssignal der Kippstufe 86 steuert den Schalter 60, über den sich der Analogspeicher 56 während der Dauer des Ausgangssignals entlädt. Vom Ausgangssignal der Kippstufe 88 werden die Schalter 68 und 78 geschlossen wobei die Dauer des Ausgangssignals der Entladezeit beziehungsweise Aufladezeit des Analogspeichers 76 beziehungsweise 70 angepaßt ist.

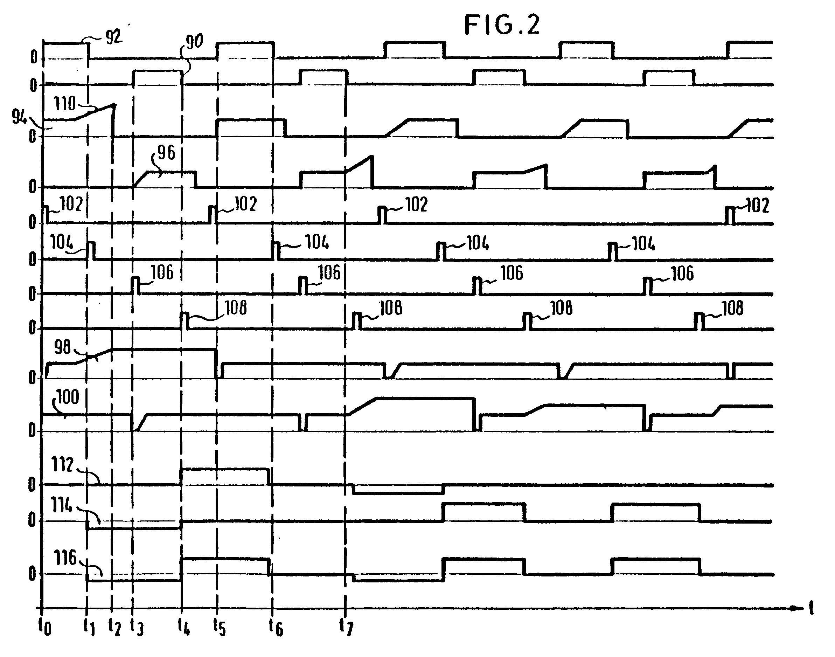

Im Diagramm der Fig. 2 sind die beiden, an den Ausgängen 30 beziehungsweise 32 auftretenden Spannungen mit 90 beziehungszweise 92 bezeichnet. (Selbstverständlich können die an den Ausgängen 30 und 32 auftretenden Signale auch von einem fremden Taktgeber T stammen). Beide Spannungen bestehen aus Rechtecksignalen mit einer vorgegebenen Periode. Die beiden Spannungen 90, 92 sind um 180° gegeneinander phasenverschoben.

Während der Impulsdauer der beiden Rechteckspannungen 90, 92 werden die Transistoren 34, 36 mit Basisströmen versorgt und dadurch in die Sättigung gesteuert. Es fließen dann Ströme über die Primärwicklungshälften 12 beziehungsweise 14 und die Transistoren 34 beziehungsweise 36. An den Bürden der Stromwandler 42 und 44 stehen den Strömen über die Transistoren 34 und 36 proportionale Spannungen 94 und 96 an. Über die Verstärker 46 beziehungsweise 48 und die Gleichrichter 50 beziehungsweise 52 gelangen diese Spannungen zu den Analogspeichern 54 und 56, in denen die Spitzenwerte der Spannungen 98 und 100 gespeichert werden. Die Kippstufe 82 erzeugt die Impulse 102, von denen der Schalter 58 geschlossen wird. Die Kippstufe 86 gibt die Impulse 106 ab. Von der Kippstufe 84 werden die Impulse 104 erzeugt, die die Schalter 72 und 74 betätigen. Schließlich gibt die Kippstufe 88 die Impulse 108 für die Steuerung der Schalter 68 und 78 ab.

Ein Impuls 102 tritt beispielsweise zum Zeitpunkt $t_0$ auf. Dadurch wird der Analogspeicher 54 entladen und die Spannung 98 auf den Wert Null zurückgesetzt. Nach Beendigung des Impulses 102 springt die Spannung 98 auf den Wert der Spannung 94. Es sei angenommen, daß bereits vor einem Zeitpunkt $t_1$ der Transformator infolge einer Zunahme der Eingangsspannung die Sättigung erreicht hat. Die Sättigung ruft eine niedrige Impedanz im Stromkreis mit der Primärhalbwicklung 12 hervor. Deshalb steigt der Strom in der Wicklung und im Transistor 34 an. Die Anstiegsflanke der dem Strom proportionalen Spannung an der Bürde des Stromwandlers 42 ist in Fig. 2 ist 110 bezeichnet. Da der Strom in der Primärhalbwicklung 14 zum Zeitpunkt $t_1$ Null ist, steht auch am Ausgang der Bürde des Stromwandlers 44 die Spannung Null an. Die Spannung des Analogspeichers 54 folgt dem Anstieg der Spannung 94 bis der Spitzenwert erreicht ist. Im Analogspeicher 56 ist noch ein Wert enthalten, der zu einem Zeitpunkt eingegeben wurde, der vor dem in Fig. 2 eingetragenen Zeitpunkt $t_0$ liegt. Dieser Wert entspricht dem über den Transistor 36 ohne Sättigung des Transformators fließenden Strom. Die Differenz der beiden Spannungen 98 und 100 ergibt ein Signal, das in Fig. 2 mit 112 bezeichnet ist und den Wert Null hat, solange die in den Analogspeichern 54 und 56 enthaltenen Werte den ohne Sättigung des Transformators fließenden symmetrischen Strömen entsprechen. Es ist dann sowohl die Differenz zwischen der Spannung 98 als Minuend und der Spannung 100 als Subtrahend als auch die Differenz mit der Spannung 100 als Minuend und der Spannung 98 als Subtrahend Null. Die letzere Differenzspannung ist in Fig. 2 mit 114 bezeichnet.

Zum Zeitpunkt $t_1$ ist die Spannung 94 bereits geringfügig größer als die den Nennwerten der Ströme bei ungesättigtem Transformator entsprechende Spannung. Diese geringfügige Erhöhung ist auch im Verlauf der Spannung 98 vorhanden. Da zum Zeitpunkt $t_1$ ein Impuls 104 auftritt, wird der Analogspeicher 70 auf Null zurückgestellt und die Differenzspannung am Ausgangsteil 66 in den Analogspeicher 76 eingegeben. Durch die Zurückstellung des Speichers 70 bleibt die Spannung 112 zum Zeitpunkt $t_1$ auf dem Wert Null stehen. Die Spannung 114 wird dagegen um die Erhöhung der Spannung 98 gegenüber dem normalen Wert negativer. Den gleichen Sprung auf einen negativen Wert führt die Spannung am Ausgang des Verstärkers 80 aus. Diese Spannung ist in Fig. 2 mit 116 bezeichnet.

Zum Zeitpunkt $t_2$ hört der Stromfluß über den Transistor 34 auf. Der Maximalwert der Spannung 98 zum Zeitpunkt $t_2$ wird zunächst noch gespeichert. Die übrigen Spannungen behalten ihre zum Zeitpunkt $t_1$ angenommenen Werte bei.

Zum Zeitpunkt $t_3$ wird die Basis des Transistors 36 mit Strom versorgt und der Transistor 36 wird leitend. Durch den unsymmetrischen Stromfluß im Transistor 34 ist eine Vorsättigung des Tranformators eingetreten, so daß der Strom im Transistor 36 und damit die Spannung 96 nur langsam auf ihren, dem normalen Betrieb entsprechenden Wert ansteigt. Zum Zeitpunkt $t_3$ gibt die Kippstufe 86 einen Impuls 106 ab, durch den der Analogspeicher 56 auf Null zurückgestellt wird. Der Speicher 56 wird nach Beendigung des Impulses 106 mit einer Spannung aufgeladen, die dem Anstieg der Spannung 96 proportional ist. An den Spannungen 112 und 114 ändert sich dabei nichts. Da die Spannung 116 einen geringfügigen negativen Wert hat, wird die Rechteckspannung 92 geringfügig verlängert. Dadurch entsteht auch ein längerer über den Transistor 36 fließender Strom, der der Symmetrierung des Übertragers entgegenkommt. Da jedoch die Verlängerung der Impulse einer Erhöhung der Ausgangsspannung entspricht, werden über die Abnahme der Regelgröße beide Signale gleichmäßig zurückgenommen.

Zum Zeitpunkt $t_4$ ist die Ansteuerung des Transistors 36 beendet. Der von der Kippstufe 88 erzeugte Impuls 108 setzt den Analogspeicher 76 auf den Wert Null zurück, das heißt die Spannung 114 wird Null. Gleichzeitig wird der Analogspeicher 70 auf die Differenz der Spannungen 98 und 100 aufgeladen. Diese Differenzspannung entspricht der bei üblichem Betrieb ohne gesättigten Transformator an den Bürden der Stromwandler 42 und 44 herrschenden Spannung. Die Spannung 116 springt deshalb ebenfalls auf diesen Wert und wirkt auf den Impulsbreitenmodulator 28 durch ihre Erhöhung des Werts der Regelabweichung im Sinne einer Verkürzung der Dauer der Ansteuerung des Transistors 34 ein.

Die Ansteuerung des Transistors 34 beginnt zum Zeitpunkt $t_5$. Da der Transformator zu diesem Zeitpunkt nicht in der Sättigung ist, steigt der Strom im Transistor 34 und damit die Spannung 94 rasch auf ihren im Normalbetrieb herrschenden Wert. Die Kippstufe 82 erzeugt wiederum einen Impuls 102, durch den der Analogspeicher 54 entladen wird. Der Analogspeicher 54 wird aber nach dem Ende des Impulses 102 sofort wieder auf den Wert der Spannung 94 aufgeladen. Die übrigen Spannungen 100, 112, 114, 116 behalten ihre Werte über den Zeitpunkt $t_5$

hinaus bei.

Zum Zeitpunkt $t_6$ fällt die Rechteckspannung 92 auf den Wert Null zurück. Hierdurch entsteht wiederum ein Impuls 104 der Kippstufe 84. Durch diesen Impuls 104 wird der Analogspeicher 70 auf den Wert Null zurückgesetzt, das heißt, die Spannung 112 wird Null. Der Analogspeicher 75 wird auf die Differenz der Spannungen 93 und 100 aufgeladen. Diese Differenz hat ebenfalls den Wert Null, so daß der von der Subtraktionsschaltung 22 erzeugten Regelabweichung kein Störgrößensignal aufgeschaltet wird.

Nach dem Zeitpunkt $t_6$ arbeitet die in Fig. 1 gezeigte Schaltungsanordnung unbeeinflußt von Störgrößen, das heißt die Impulsdauern der Rechtecksignale 90 und 92 stimmen miteinander überein.

Es sei angenommen, daß zum Zeitpunkt $t_7$ durch die Einwirkung einer Störgröße, zum Beispiel einer Änderung der Eingangsspannung, der Strom im Kreis mit der Primärhalbwicklung 14 und dem Transistor 36 anzusteigen beginnt. Dadurch entsteht eine Unsymmetrie hinsichtlich des Stromverlaufs in den beiden Zweigen der Primärseite des Gegentakt-Wanders. Nach dem Zeitpunkt $t_7$ laufen daher in bezug auf den Stromkreis mit der Halbwicklung 14 und dem Transistor 36 ebensolche Ausgleichsvorgänge ab, wie sie bereits oben für eine Unsymmetrie des Kreises mit der Halbwicklung 12 und dem Transistor 34 beschrieben wurden.

Durch die oben erläuterte Steuerung der Schalter 72 und 74 beziehungsweise 68 und 78 mittels der monostabilen Kippstufen 84 und 88 wird erreicht, daß am Verstärker 80 immer nur eine der Differenzspannungen der Ausgangsteile 64, 66 ansteht. Die Spannung am Verstärker 80 entspricht also entweder der Umsymmetrie des Kreises mit der Halbwicklung 12 und dem Transistor 34 oder derjenigen des Kreises mit der Halbwicklung 14 und dem Transistor 36.

Entspricht die festgestellt Störgrößenspannung 116 der Differenz zwischen einer unsymmetrischen Spannung 94 und der zeitlich davor gemessenen Spannung 96, dann wird aufgrund des Vorzeichens der Spannung 116 die Rechtecksignaldauer des Signals 90 vergrößer, wenn die Spannung 94 die Spannung 96 übersteigt. Andererseits wird die Rechtecksignaldauer des Signals 90 verkürzt, wenn die Spannung 94 kleiner als die Spannung 96 ist.

Hierdurch läßt sich erreichen, daß zwischen der Erfassung einer Unsymmetrie und dem Einsetzen der Gegenmaßnahmen nur ein halbe Periode der Rechteckspannungen 90, 92 liegt.

Ein einfacherer Schaltungsaufbau entsteht dann, wenn einer der Zweige mit den Elementen 68, 70, 72 oder 74, 76, 78 weggelassen wird. Die Anordnung hält auch in diesem Fall bei großen Störgrößenänderungen eine genaue Regelung der Ausgangsspannung aufrecht. Es wird dann jedoch nur die Rechtecksignaldauer der Spannung 92 beziehungsweise 90 durch den Impulsbreitenmodulator 28 beeinflußt wenn Störgrößenänderungen auftreten. Wenn die Störgrößenspannung 116 aus der Differenz des unsymmetrischen Signals 96 und dem zeitlich davor gemessenen Signal 94 erhalten wurde, wird sofort auf die Rechtecksignaldauer der Spannung 92 so eingewirkt, daß bei größerer Spannung 96 und kleinerer Spannung 94 die Rechtecksignaldauer verlängert wird und bei kleinerer Spannung 96 und größerer Spannung 94 die Rechtecksignaldauer verkürzt wird.

Der einfachere Schaltungsaufbau bewirkt jedoch, daß zwischen der Erfassung einer Umsymmetrie und dem Einsetzen der Gegenmaßnahmen eine gesamte Periode der Rechteckspannungen 90 beziehungsweise 92 vergeht.

Besonders sei noch hervorgehoben, daß unter Berücksichtigung der zuvor aufgezeigten Maßnahmen bei einer Störgrößenaufschaltung Minuend und Subtrahend wechselnd als Sollwert und Istwert verglichen werden, um eine schnellere Stromregelung zu erzielen.

## Patentansprüche

1. Verfahren zur Aufrechterhaltung der Eingangs-Symmetrie eines Gegentaktwandlers bei großen Schwankungen der Eingangsspannung sowie der Ausgangslast, wobei aus der Ausgangsspannung oder dem Ausgangsstrom als dem Istwert der Regelgröße und einem Sollwert die Regelabweichung gebildet wird und der Istwert durch Änderung der Schaltzeiten von periodischen ein- und ausgeschalteten Transistoren konstant gehalten wird, von denen abwechselnd der Fluß von Primärströmen in einem Transformator des Gegentaktwandlers gesteuert wird, und wobei die stromführenden Periodendauern der Transistoren gemessen und aus den Meßwerten, insbesondere aus den Amplituden der über die Transistoren (34, 36) fließenden Ströme, Differenzen erzeugt werden, die der Unsymmetrie der Primärströme entsprechen und auf Stellglieder zur Einstellung gleicher Primärströme einwirken, dadurch gekennzeichnet, daß die Stromamplituden oder die Spannungszeitflächen der in jeder stromführenden Periode an den Transistoren (34, 36) anstehenden Ströme bzw. Spannungen gemessen werden und daß nach Beendigung der Feststellung der Spannungszeitfläche oder Stromamplitude in einer stromführenden Periode des ersten Transistors (34) die Differenz unter Verwendung der Spannungszeitfläche oder Stromamplitude der unmittelbar vorausgegangenen stromführenden Periode des zweiten Transistors gebildet und der Regelabweichung, bis eine weitere Differenz bei der Messung der nächstfolgenden Amplitude oder Spannungszeitfläche vorgebbar ist, zur Beeinflussung der Dauer der stromführenden Periode des ersten Transistors (34) in dem Sinne aufgeschaltet wird, daß die Periode verlängert wird, wenn die Spannungszeitfläche oder Stromamplitude am zweiten Transistor (36) diejenige des ersten Transistors (34) übersteigt und im umgekehrten Fall verkürzt wird.

2. Verfahren zur Aufrechterhaltung der Eingangs-Symmetrie gemäß Anspruch 1 dadurch gekennzeichnet, daß anstatt einer zwei Differenzen erzeugt, werden, die aus den in benachbarten stromführenden Perioden der Transistoren (34, 36) festgestellten Spannungszeitflächen oder Stromamplituden durch die jeweilige Vertauschung von Minuend und Subtrahend abgeleitet werden, daß als Störgröße jeweils diejenige Differenz, deren in der gerade ablaufenden Periode festgestellte Spannungszeitfläche oder Stromamplitude den Subtrahend bildet, der Regelabweichung so lange aufgeschaltet wird, bis eine weitere Differenz bei der Messung der nächstfolgenden Amplitude oder Spannungszeitfläche verfügbar ist.

3. Vorrichtung mit einem Gegentaktwandler, der einen Transformator mit zwei gleichen Primärwicklungen (12, 14) oder eine mit einer Mittelanzapfung (10) versehene Primärwicklung sowie zwei Sekundärwicklungen (16) enthält, von denen eine zur Abgabe des Istwerts der Regelgröße bestimmt ist, der nach der Subtraktion des Sollwerts einen Pulsbreitenmodulator beaufschlagt, durch den in zwei um 180° phasenverschobenen Perioden zwei Transistoren (34, 36) ein- und ausgeschaltet werden, von denen jeder in Reihe mit einer Primärwicklung (12, 14) oder Primärwicklungshälfte angeordnet ist, wobei mit den die Primärwicklung oder Primärwicklungshälften und die Transistoren enthaltenden Stromkreisen jeweils Meßwertgeber (42, 44) für die Periodendauern, insbesondere Stromwandler nebst Bürden verbunden sind, deren Ausgangssignale zur Bildung von Differenzwerten benutzt werden, zur Durchführung des Verfahrens nach Anspruch 1, dadurch gekennzeichnet, daß als Meßwertgeber Spannungszeitflächenmeßeinrichtungen vorgesehen sind, daß den Meßeinrichtungen (42, 44) Speicher (54, 56) nachgeschaltet sind, die jeweils zu Beginn eines Ansteuersignals (90, 92) für die Transistoren (34, 36) auf Null zurückstellbar sind, daß die Speicher (54, 56) mit Eingängen einer Subtraktionsschaltung (62) verbunden sind, die zwei Differenzen erzeugt, bei denen jeweils Minuend und Subtrahend vertauscht sind, daß die beiden Differenzen verschiedenen Speichern (70, 76) zuführbar sind, die abwechselnd durch die Ansteuersignale (90, 92) der zwei Transistoren (34, 36) auf Null zurückstellbar sind, und daß die Speicher (70, 76) an Eingänge eines Differenzverstärkers (80) angeschlossen sind, dem ein Summierglied (26) für die Störgrößenaufschaltung mit der Regelabweichung nachgeschaltet ist, wobei das Summierglied (26) einen Impulsbreitenmodulator (28) speist, der zwei, mit je einem der Transistoren (34, 36) verbundene Ausgänge (30, 32) aufweist.

4. Vorrichtung nach Anspruch 3, dadurch gekennzeichnet, daß zu den Speichern (54, 56) Schalter (58, 60) parallel gelegt sind, die von Ausgangssignalen monostabiler Kippstufen (82, 86) einschaltbar sind, die jeweils von einer Anstiegsflanke des Ansteuersignals (90, 92) oder dem Grundtakt für die Transistoren (34, 36) anstoßbar sind.

5. Vorrichtung nach Anspruch 3 oder 4, dadurch gekennzeichnet, daß die Speicher (70, 76) eingangsseitig je an einen Schalter (68, 74) angeschlossen sind, von denen jeder von einem Ausgang (64, 66) der Subtraktionsschaltung (62) gespeist ist, daß parallel zu den Speichern (70, 76) je ein Schalter (77, 78) gelegt ist und daß jeweils der Schalter (68 beziehungsweise 74) am Eingang des einen Speichers (70 beziehungsweise 76) und der Schalter (78 beziehungsweise 72) parallel zum anderen Speicher (76 beziehungsweise 70) durch das Ausgangssignal einer gemeinsamen monostabilen Kippstufe (88 beziehungsweise 84) einschaltbar sind, wobei die Kippstufen (88 beziehungsweise 84) je von einer der abfallenden Flanken der Ansteuersignale (92, 90) der Transistoren (34, 36) anstoßbar sind.

6. Vorrichtung nach Anspruch 3, dadurch gekennzeichnet, daß die Subtraktionsschaltung (62) nur einen Ausgang (64) aufweist, der einen Kreis mit einem Schalter (68) einem Speicher (70) und einem parallel zum Speicher (70) liegenden Schalter (72) speist, daß der Speicher (70) mit einem Verstärker (80) verbunden ist, der die Störgröße über ein Summierglied (26) einem Impulsbreitenmodulator (28) für die Ansteuerung der Transistoren (34, 36) zuführt, und daß die Schalter (68, 72) je von einer monostabilen Kippstufe (84, 88) einschaltbar sind, die von einer abfallenden Flanke eines Ansteuersignals anstoßbar sind.

7. Verfahren nach Anspruch 2, dadurch gekennzeichnet, daß bei einer Störgrößenaufschaltung Minuend und Subtrahend zur schnelleren Stromregelung abwechselnd als Sollwert und Istwert verglichen werden.

**Revendications**

1. Procédé pour maintenir la symétrie d'entrée d'un convertisseur push-pull dans le cas d'importantes fluctuations de la tension d'entrée et de la sortance, où l'écart de réglage est formé à partir de la tension de sortie ou du courant de sortie en qualité de valeur effective de la grandeur de réglage et d'une valeur de consigne, la valeur effective étant maintenue constante à l'aide de la modification des durées de commutations des transistors, connectés et déconnectés périodiquement, qui commandent alternativement le flux de courants primaires à l'intérieur d'un transformateur du convertisseur push-pull, et où les durées des périodes conductrices de courant des transistors sont mesurées pour l'établissement de différences à partir des valeurs mesurées, en premier lieu à partir des amplitudes de courant traversant les transistors (34, 36), différences qui, correspondant à l'asymétrie des courants primaires, agissent sur des organes de réglage pour initier le réglage de courants primaires identiques, caractérisé par le fait que les amplitudes de courant ou les aires temps-tension des courants ou des tensions se trouvant pendant chaque période conductrice de courant sur les transistors (34, 36), sont mesurés et, après l'achèvement de la détermination de l'aire temps-tension ou de l'amplitude de courant pendant une période conductrice du premier transistor (34), la différence est établie en utilisant l'aire temps-tension ou l'amplitude de courant de la période conductrice de courant directement précédente du deuxième transistor, et que, jusqu'à ce que l'on puisse préfixer une autre différence établie lors de la mesure de l'amplitude ou de l'aire temps-tension suivante, l'écart de réglage destiné à influencer la durée de la période conductrice de courant du premier transistor (34) est appliqué dans le but de prolonger la période à l'aire temps-tension ou l'amplitude de courant du deuxième transistor (36) est supérieure à celle du premier transistor (34), ou, dans le cas contraire, de la raccourcir.

2. Procédé pour maintenir la symétrie d'entrée selon la revendication 1 caractérisé par le fait qu'au lieu d'une différence, deux différences sont établies à partir des aires temps-tension ou des amplitudes de courant déterminées dans les périodes conductrices de courant voisines des transistors (34, 36) en interchangeant minuend et numéro à soustraire; que jusqu'au moment où l'on dispose d'une autre différence établie lors de la mesure de l'amplitude ou de l'aire temps-tension suivante, la grandeur perturbatrice ajoutée à l'écart de réglage est toujours la différence dont l'aire temps-tension ou l'amplitude de courant qui vient d'être déterminée dans la période en cours forme le numéro à soustraire.

3. Dispositif avec un convertisseur push-pull qui comprend un transformateur avec deux enroulements primaires identiques (12, 14) ou un enroulement primaire, pourvu d'une prise médiane (10), et deux enroulements secondaires (16) dont un est destiné à fournir la valeur effective de la grandeur de réglage qui, après la soustraction de la valeur de consigne, excite un modulateur de la largeur d'impulsion, provoque la connexion et la déconnexion de deux transistors (34, 36) en deux périodes déphasées de 180°, chacun d'eux étant disposé en ligne avec un enroulement primaire (12, 14), ou avec un demi-enroulement primaire, où les circuits contenus dans l'enroulement primaire, ou dans les demi-enroulements primaires, et dans les transistors, sont toujours reliés à des capteurs de mesure (42, 44) pour les durées de périodes, surtout des transformateurs d'intensité avec charges, dont les signaux de sortie sont utilisés pour l'établissement de valeurs de différence qui permettent la réalisation du procédé selon la revendication 1, caractérisé par le fait que des dispositifs de mesure des aires temps-tension sont prévus comme capteurs de mesure, que, après ces dispositifs de mesure (42, 44), des accumulateurs (54, 56) sont placés qui peuvent toujours être ramenés à zéro lors du commencement d'un signal de sélection (90, 92) pour les transistors (34, 36), que les accumulateurs (54, 56) sont reliés à des entrées d'un montage de soustraction (62) qui établit deux différences où le minuend et le numéro à soustraire sont toujours interchangés, que les deux différences peuvent être amenées à deux accumulateurs différents (70, 76) susceptibles d'être ramenés alternativement à zéro par les signaux de sélection (90, 92) des deux transistors (34, 36), et que les accumulateurs (70, 76) sont reliés à des entrées d'un amplificateur de différences (80), avec un additionneur (26), placé après pour la compensation de perturbation avec l'écart de réglage, où l'additionneur (26) alimente un modulateur de la largeur d'impulsions (28) qui possède deux sorties (30, 32), dont chacun est relié à un des transistors (34, 36).

4. Dispositif selon la revendication 3, caractérisé par le fait que parallèle aux accumulateurs (54, 56), des interrupteurs (58, 60) sont placés qui peuvent être connectés par des signaux de sortie d'étages de relaxation monostables (82, 86), chacun d'eux susceptible de recevoir des chocs d'un flanc arrière du signal de sélection (90, 92) ou du rythme de base pour les transistors (34, 36).

5. Dispositif selon la revendication 3 ou 4, caractérisé par le fait que de côté entrée, chacun des accumulateurs (70, 76) est raccordé d'un interrupteur (68, 74), dont chacun est alimenté à partir d'une sortie (64, 66) du montage de soustraction (62); que parallèle aux accumulateurs (70, 76) se trouve toujours un interrupteur (77 ou 78), et que l'interrupteur (68 ou 74) à l'entrée d'un des accumulateurs (70 ou 76) et l'interrupteur (78 ou 72) parallèle à l'autre accumulateur (76 ou 70) peuvent être connectés par le signal de sortie d'un commun étage de relaxation monostable (88 ou 84), les étages de relaxation (88 ou 84) étant susceptibles de recevoir des chocs provenant d'un des flacs arrières des signaux de sélection (92, 90) des transistors (34, 36).

6. Dispositif selon la revendication 3, caractérisé par le fait que le montage de soustraction (62) ne possède qu'une seule sortie (64), qui alimente un circuit avec un interrupteur (68), un accumulateur (70), et un interrupteur (72) en position parallèle à l'accumulateur (70); que l'accumulateur (70) est relié à un amplificateur (80) qui amène, à travers un additionneur (26), la grandeur perturbatrice à un modulateur de la largeur d'impulsions (28) pour la commande des transistors (34, 36); et que chacun de ces interrupteurs (68, 72) peut être connecté par un étage de relaxation monostable (84, 88), étages susceptibles de recevoir des chocs provenant d'un flanc arrière d'un signal de sélection.

7. Dispositif selon la revendication 2, caractérisé par le fait que pour accélérer le réglage du courant lors d'une compensation de perturbation, le minuend et le numéro à soustraire sont alternativement comparés comme valeur de consigne et valeur effective.

## Claims

1. Method for maintaining the input symmetry of a push-pull inverter subject to large fluctuations of the input voltage as well as the output load, whereby the deviation from norm is formed from the output voltage or the output current as the actual value of the norm size and the desired value and the actual value is held constant by varying the switching times of transistors periodically switched on and off, which alternately control the flow of primary currents in a transformer of the push-pull inverter and whereby the current carrying periods of the transistors are measured and differences are derived from the measuring values, especially from the amplitudes of the currents flowing over the transistors (34, 36), said differences corresponding to the asymmetry of the primary currents and acting upon servo components for the setting of the same primary currents characterised in that the current amplitudes or the voltage time surfaces of the currents or voltages present in the transistors (34, 36) in every current carrying period are measured and that when the voltage time surfaces or current amplitude in one current carrying period of the first transistor (34) has been ascertained, the difference is formed by use of the voltage time surface or current amplitude of the directly previous current carrying period of the second transistor and the deviation from norm, until a further difference can be given at the measuring of the following amplitude or voltage time surface, is switched up in this sense to influence the length of the current carrying period of the first transistor (34), that the period is lengthened when the voltage time surface or the current amplitude on the second transistor (36) exceeds that of the first transistor and is shortened in the reverse case.

2. Method for the maintaining of input symmetry in accordance with claim 1 characterised in that instead of one, two differences are produced which are derived from the voltage time surfaces or current amplitudes found in a neighbouring current carrying period of the transistors (34, 36) by the exchange of minuend and subtraction in each case, that as interference size in each case that difference, whose voltage time surface or current amplitude found in the period just finishing forms the subtraction, is switched up to the deviation from norm so long until a further difference is available at the measuring of the consecutive amplitude or voltage time surface.

3. Device with a push-pull inverter which contains a transformer with two identical primary winders (12, 14) or one primary winder equipped with a mid connection (10) as well as two secondary winders (16), of which one is intended for the reading off of the actual value of the norm size, which after the subtraction of the desired value charges a pulse width modulator, via which two transistors (34, 36) are switched on and off in two periods dephased by 180°, of the two transistors each is arranged in a series with a primary winder (12, 14) or primary winder half, whereby in each case measuring value indicators (42, 44) for the periods, especially current transformers as well as resistances, are connected with the current circuits containing the primary winder or primary winder halfs and the transistors, the output signals of these measuring value indicators being used to form difference values for the carrying out of the method according to claim 1 characterised in that voltage time surface measuring devices are provided as measuring value indicators, that the measuring devices (42, 44) are followed by memories (54, 56) which can be re-set at zero at the beginning of a drive signal (90, 92) for the transistors (34, 36), that the memories are connected to the inputs of a subtraction switch producing two differences where minuend and subtraction are each exchanged, that the two differences can be conducted to differing memories (70, 76) which can be returned to zero alternately via the drive signals (90, 92) of the two transistors (34, 36), and that the memories (70, 76) are attached to inputs of a difference amplifier (80) which is followed by a summing circuit (26) for the difference size switch up with the deviation from the norm, whereby the summing circuit (26) feeds a pulse width modulator (28) which has two outputs (30, 32) each connected to one of the transistors (34, 36).

4. Device according to claim 3 characterised in that switches (58, 60) are laid parallel to the memories (54, 56) which can be switched on by output signals of monostable flip-flops (82, 86) which can be triggered in each case by a leading edge of the drive signal (90, 92) or by the basic cycle for the transistors (34, 36).

5. Device according to claim 3 or 4 characterised in that the memories (70, 76) are each connected on the input side to one switch (68, 74), of which each is fed by an output (64, 66) of the subtraction switch (62), that a switch (77, 78) is laid parallel to each of the memories (70, 76) and that in each case the switch (68, or 74) at the input of one memory (70 or 76) and the switch (78 or 72) parallel to the other memory (76 or 70) can be switched on by the output signal of a mutual monostable flip-flop (88 or 84), whereby the flip-flops (88 or 84) can each be triggered by one of the falling out edges of the drive signals (92, 90) of the transistors (34, 36).

6. Device according to claim 3 characterised in that the subtraction switch (62) has only one output (64) which feeds a circuit with a switch (68), a memory (70) and a switch (72) lying parallel to the memory (70), that the memory (70) is connected to an amplifier which conducts the interference size via summing circuit (26) to a pulse width modulator (28) for the drive of the transistors (34, 36), and that the switches (68, 72) can each be switched on by one monostable flip-flop (84, 88) which can be triggered by an edge falling from a drive signal.

7. Device according to claim 2 characterised in that in the case of an interference size switch up minuend and subtraction are compared alternately for faster current regulation as desired value and actual value.

10

FIG.1

FIG.2